(19) Europäisches Patentamt / European Patent Office / Office européen des brevets

(11) EP 1 556 986 B1

(12) **EUROPÄISCHE PATENTSCHRIFT**

(45) Veröffentlichungstag und Bekanntmachung des Hinweises auf die Patenterteilung:
**06.06.2007 Patentblatt 2007/23**

(21) Anmeldenummer: **03753525.9**

(22) Anmeldetag: **08.10.2003**

(51) Int Cl.:
***H04L 7/02*** *(2006.01)*

(86) Internationale Anmeldenummer:
**PCT/EP2003/011099**

(87) Internationale Veröffentlichungsnummer:
**WO 2004/038993 (06.05.2004 Gazette 2004/19)**

(54) **VERFAHREN UND SCHALTUNG ZUR ERZEUGUNG EINES HILFSSYMBOLS ZUM EINREGELN EINES QAM-DEMODULATORS**

METHOD AND CIRCUIT FOR GENERATING AN AUXILIARY SYMBOL FOR ADJUSTING A QAM DEMODULATOR

PROCEDE ET CIRCUIT POUR GENERER UN SYMBOLE AUXILIAIRE POUR LE REGLAGE D'UN DEMODULATEUR MAQ

(84) Benannte Vertragsstaaten:
**DE FR GB IT NL**

(30) Priorität: **24.10.2002 DE 10249492**

(43) Veröffentlichungstag der Anmeldung:
**27.07.2005 Patentblatt 2005/30**

(73) Patentinhaber: **Micronas GmbH**
**79108 Freiburg i. Br. (DE)**

(72) Erfinder:
- **BOCK, Christian**
  **79108 Freiburg (DE)**
- **TEMERINAC, Miodrag**
  **79194 Gundelfingen (DE)**
- **NOESKE, Carsten, Dipl-Ing.**
  **79350 Sexau (DE)**

(56) Entgegenhaltungen:
**DE-A- 19 920 334** **US-A- 4 646 173**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 556 986 B1

Printed by Jouve, 75001 PARIS (FR)

## Beschreibung

Die Erfindung betrifft ein Verfahren und eine Einrichtung zur Erzeugung eines Hilfssymbols, das beim Empfang von digitalen, mit einem Quadratursignalpaar gekoppelten Signalen dem schnelleren Einrasten von entscheidungsrückgekoppelten Regelschleifen dient. Derartige Regelschleifen finden sich beispielsweise bei der Einstellung von Abastzeitpunkten, bei der Einstellung eines Entzerrers, der lineare Verzerrungen beim Empfang des Quadratursignalpaares beseitigt, oder bei einer automatischen Verstärkungsregelung zur Anpassung der empfangenen Signale an den Aussteuerbereich. Die Erfindung betrifft insbesondere den Betriebszustand der Empfangseinrichtung, bei dem die Träger- und Phasenregelung des Lokaloszillators noch nicht eingerastet sind.

Diese digitalen Signale, die auch als Symbole bezeichnet werden, stellen in codierter Form einen ein- oder mehrstelligen Digitalwert dar. Die Codierung erfolgt für die Übertragung über das Quadratursignalpaar, das einem Zeiger entspricht, der zu bestimmten Zeitpunkten diskrete Positionen im Amplituden- und Phasenraum des Quadratursignalpaares einnimmt. Diese Zeitpunkte folgen in äquidistanten Abständen aufeinander und müssen durch den Abtasttakt möglichst genau getroffen werden. Die üblichen Abkürzungen für diese Übertragungsverfahren sind QAM entsprechend "Quadrature Amplitude Modulation" und PSK entsprechend "Phase Shift Keying".

In einem üblichen Empfänger zum Empfang digitaler Signale mischt ein komplexer Multiplizierer oder Mischer, der von einem Lokaloszillator angesteuert wird, das empfangene, auf einen Träger modulierte QAM-Signal frequenz- und phasenrichtig in das Basisband. Bei einer digitalen Verarbeitung kann dies vor oder nach einer A/D-Umsetzung (A/D = Analog-Digital) erfolgen, wobei das Signal zweckmäßigerweise mit dem Symboltakt oder einem Vielfachen davon abgetastet und digitalisiert wird. Wenn der Digitalisierungstakt ein geradzahliges Vielfaches des Symboltaktes ist, dann liegt der Symboltakt jeweils genau auf einem realen Abtastwert. Der Digitalisierungstakt ist dabei zweckmäßigerweise mit dem rückgewonnenen Symboltakt über eine Phasenregelschleife (=PLL) verkoppelt. Wenn der Digitalisierungstakt gegenüber dem erforderlichen Symboltakt freilaufend ist, wird das Symbol letztendlich über eine rein digitale Abtastratenwandlung als Zeitinformation gebildet. Hierdurch wird eine zeitliche Interpolation zwischen den digitalisierten Abtastwerten des digitalen Signals gesteuert. Verstärkungsregelungen sorgen dafür, daß der jeweilige Aussteuerbereich ausgenutzt wird, und daß die empfangenen Symbole richtig auf die Symbolentscheiderstufe abgebildet werden. Ein adaptiver Entzerrer (=Equalizer) vermindert die Intersymbolinterferenz, die in linearen Verzerrungen des Senders, der Übertragungsstrecke oder des Empfängers ihren Ursprung haben.

Bei hochwertigen Demodulatoren für QAM- oder PSK-Signale, die nach dem Stand der Technik arbeiten, betrachten die Regelschaltungen für die Frequenz- und Phasenregelung des Lokaloszillators, die Verstärkungsregelung, die Rückgewinnung des Symboltaktes und den adaptiven Entzerrer die Differenzen zwischen dem empfangenen Symbol und demjenigen Element des vorgegebenen Symbolalphabets, das von einer Entscheiderstufe als wahrscheinlichstes angesehen wird. Diese Art der Regelung über das entschiedene Symbol wird als "entscheidungsrückgekoppelte" Regelung bezeichnet. Da bei den digitalen Demodulatoren nach dem Stand der Technik die entscheidungsrückgekoppelten Regelungen miteinander verkoppelt sind, ist das Einrasten schwierig, solange die Regelung für den Träger des Lokaloszillators, der das Empfangssignal in das Basisband mischt, frequenz- und phasenmäßig noch nicht stabil ist. Oft gelingt das Einrasten nur, wenn die jeweiligen Frequenzen und Phasen relativ dicht bei ihren Sollwerten liegen. Beispiele für entscheidungsrückgekoppelte Regelungen finden sich in dem Grundlagenbuch: K.D. Kammeyer, "Nachrichtenübertragung", Verlag B.G. Teubner, Stuttgart, 2. Auflage 1996, Seiten 429 bis 433, im Kapitel 5.7.3 "Adaptiver Entzerrer mit quantisierter Rückführung", Seiten 200 bis 202, im Kapitel 5.8.3 "Entscheidungsrückgekoppelte Taktregelung", Seiten 213 bis 215 und im Kapitel 12.2.2 "Entscheidungsrückgekoppelte Trägerphasenregelung im Basisband", Seiten 429 bis 431.

US 5, 471,508 beschreibt ein Verfahren, bei dem die entscheidungsrückgekoppelte Trägerphasenregelung nur für eine Phase im IQ-Raum entschieden wird, wobei nur vier Möglichkeiten zugelassen sind, während der Radius entweder unberücksichtigt bleibt oder einen Mindestradius eingeführt wird, innerhalb dessen keine Entscheidung stattfindet. Das Ergebnis dieser Entscheidung ist eine Phase mit beliebigem Radius. Dadurch wird erreicht, daß die Regelung nur für die Ecken der Konstellation empfindlich ist und somit eine schnellere Trägerfrequenzregelung erzielt.

Aufgabe der Erfindung ist es, ein verbessertes Verfahren und eine zugehörige Einrichtung anzugeben, die in einer Empfangseinrichtung für digitale Signale entscheidungsrückgekoppelte Regelungen voneinander entkoppelt, wodurch ein rasches Einrastverhalten für den Abtasttakt, den Entzerrer oder die Verstärkung unabhängig von Frequenz und Phasenlage des Lokaloszillators ermöglicht wird.

Die Aufgabe wird durch ein Verfahren nach Anspruch 1 und durch eine Schaltungsanordnung nach Anspruch 13 gelöst. Während der Einregelphase der entscheidungsrückgekoppelten Regelungen wird ein Hilfssymbol bereitgestellt, welches das entschiedene Symbol ersetzt. Für die Bildung und Definition des Hilfssymbols wird die Radius- und Winkelinformation des empfangenen Signals bzw. des vorläufigen Symbols verwendet. Der Fehler bei der Angabe der Winkelinformation infolge der unbekannten Ablage der Frequenz und Phase des Lokaloszillators, wird bewußt ignoriert. Dies wird dadurch erreicht, daß ein Hilfssymbolentscheider dem empfangenen Signal nicht ein Element aus dem vorgegebenen Symbolalphabet zuordnet, sondern statt dessen ein Hilfssymbol erzeugt, das auf einem der möglichen Sollradien liegt. Als Sollradien werden diejenigen Radien bezeichnet, auf denen bei QAM-Verfahren die Symbole des Alphabets in der vom Quadratursignalpaar aufgespannten Ebene liegen. Als Winkelkomponente des Hilfssymbols dient die Winkelinformation des abgetasteten digitalen Signals. In Polarkoordinaten entspricht das Hilfssymbol somit dem Zeigerschnittpunkt des abgetasteten digitalen Signals mit dem wahrscheinlichsten Sollradius. Die Entscheidung, welcher Sollradius der wahrscheinlichste ist, erfolgt über Bereichsgrenzen, die sich im einfachsten Fall an den möglichen Radien des jeweiligen QAM-Standards orientieren, indem Grenzradien definiert werden. Diese Grenzradien bilden unterschiedlich breite Kreisringe in der Quadratursignalebene, die jeweils einen Sollradius enthalten. Möglich ist auch, daß sich die Bereichsgrenzen nicht nur an den Sollradien orientieren, sondern auch noch die Lage der in Betracht zu ziehenden Elemente in der Quadratursignalebene berücksichtigen. In diesem Fall definieren die Bereichsgrenzen nicht mehr ideale Kreisringe, sondern verzerren diese mehr oder weniger. Das heißt aber, daß die jeweilige Winkelinformation die Hilfsentscheidung beeinflußt, allerdings nur mit geringer Gewichtung. Außerdem können ganze Bereiche der Quadratursignalebene für die Hilfsentscheidung ausgeblendet werden, weil ihre Auswertung zu unsicher ist.

In einem vorausgehenden Schritt wird festgelegt, wo die einzelnen Sollradien und Bereichsgrenzen liegen, damit der wahrscheinliche Sollradius ausgewählt werden kann. Für den Fall, daß die Entscheidung über den wahrscheinlichsten Sollradius durch reine Kreisringe erfolgt, werden Radiengrenzen festgelegt, die zweckmäßigerweise auf der Mitte zwischen zwei benachbarten Sollradien liegen. Ob die jeweiligen Radien- oder Bereichsgrenzen dabei aus einer Tabelle abgefragt werden oder ob sie entsprechend dem Übertragungsstandard laufend neu berechnet werden, ist von untergeordneter Bedeutung.

Bei QAM-Verfahren höherer Ordnung können einige dieser Kreisringe so schmal sein, daß ihre Auswertung in Verbindung mit den üblichen Störungen unsicher ist. Da ihr Regelbeitrag andererseits gering ist, stört diese Unsicherheit kaum. Diese unsicheren Kreisringe lassen sich durch eine geeignete Gewichtung der Regelinformation in ihrer Wirkung weiter reduzieren oder man blendet sie ganz aus. Weiterhin kann man auch Kreisringe zulassen, die den jeweiligen Sollradius enger umschließen und ihn so mit größerer Sicherheit erfassen. Liegt der gemessene Radius außerhalb dieser engeren Radiusgrenzen, dann wird kein Hilfssymbol gebildet, weil dies zu unsicher wäre.

Für ein empfangenes digitales Signal mit den Quadraturkomponenten $I = R \cos \alpha$ und $Q = R \sin \alpha$, das in einen Kreisring fällt, dessen Sollradius Rsi ist, wird im Hilfssymbolentscheider auf der Position mit dem Sollradius Rsi und dem Winkel $\alpha$ ein Hilfssymbol mit den Polarkoordinaten Rsi, $\alpha$ gebildet. Damit dieses Hilfssymbol den entscheidungsrückgekoppelten Regelungen von Taktrückgewinnung, Verstärkungsregelung oder Entzerrer als "entschiedenes Symbol" dienen kann, werden dessen Quadraturkomponenten $I_h = R_{si} \cos \alpha$ und $Q_h = R_{si} \sin \alpha$ gebildet.

Die Bestimmung des Radius R und des Winkels $\alpha$ aus den Quadraturkomponenten I, Q erfolgt rechnerisch aus den Beziehungen:

$$R = \sqrt{(I^2 + Q^2)}$$

$$\alpha = \arctan(Q/I)$$

Es gibt auch Koordinatenumsetzer, die kartesische Koordinaten auf andere Weise in polare Koordinaten umsetzen. Bei der digitalen Signalverarbeitung wird hierbei gem das "Cordic"-Verfahren angewendet, weil es für die Umwandlung nur Additionen und Zweier-Multiplikationen, die bei Binärzahlen durch einfache Stellenverschiebungen zu realisieren sind, verwendet. Weiterhin sind andere Näherungsverfahren oder Tabellen möglich. Die inverse Umsetzung, also die Umsetzung von polaren Signalkomponenten R und $\alpha$ in ihre Quadraturkomponenten $I = R \cos \alpha$, und $Q = R \sin \alpha$ kann ebenfalls mit einem Cordic-Umsetzer, einer Tabelle oder einem Näherungsverfahren erfolgen.

Die Erfindung und vorteilhafte Weiterbildungen werden nun anhand der Figuren der Zeichnung näher erläutert:

- Fig. 1 zeigt die Position der 16 Symbole in der I/Q-Quadraturebene bei einem 16 QAM-Signal,
- Fig. 2. zeigt einen Nyquist-Impuls mit einer synchronisierten Abtastung,
- Fig. 3 zeigt einen Nyquist-Impuls mit einer nichtsynchronisierten Abtastung,
- Fig. 4. zeigt im ersten Quadranten die Positionen von 16 Symbolen eines 64 QAM-Signals,
- Fig. 5 zeigt schematisch als Blockschaltbild ein erstes Ausführungsbeispiel eines Demodulators mit einem Hilfssymbolerzeuger nach der Erfindung und
- Fig. 6 zeigt schematisch als Blockschaltbild ein zweites Ausführungsbeispiel eines Demodulators mit einem Hilfssymbolerzeuger nach der Erfindung.

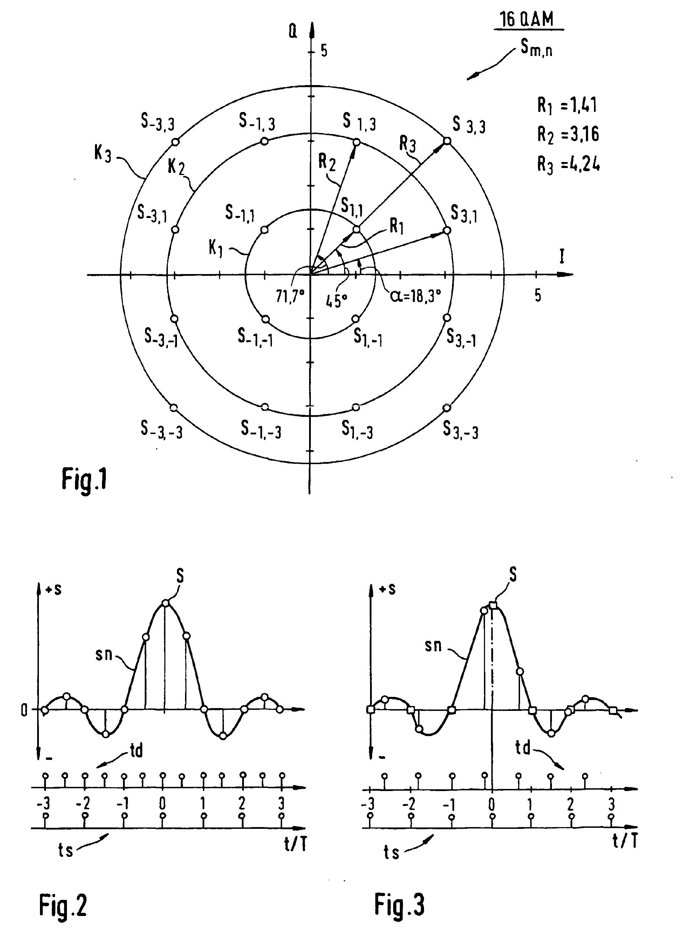

In Fig. 1 wird von einem Quadratursignalpaar I, Q eine Ebene aufgespannt, in der die Positionen der 16 Symbole $S_{m,n}$ eines 16 QAM-Signals eingezeichnet sind. Die Bezeichnungen der einzelnen Symbole $S_{m,n}$ unterscheiden sich durch die Angaben der jeweiligen kartesischen Koordinaten. So hat beispielsweise das Symbol $S_{-3,1}$ als I-Koordinate den Wert -3 und als Q-Koordinate den Wert 1. Das Diagramm enthält auch die Kreise $K_1$, $K_2$ und $K_3$, auf denen die Symbole $S_{m,n}$ liegen. Den Kreisen sind die vom Koordinatenursprung aus gerechneten Radiuswerte $R_1$= 1,41; $R_2$= 3,16 und $R_3$= 4,24 zugeordnet. Zur Definition der Symbole $S_{m,n}$ über ihre Polarkoordinaten R, $\alpha$ sind die jeweiligen Winkelkomponenten $\alpha$ erforderlich, die beispielsweise für die Symbole $S_{3,1}$; $S_{3,3}$ und $S_{1,1}$; $S_{1,3}$ die Winkel $\alpha$ = 18.3° bzw. $\alpha$ = 45° bzw. $\alpha$ = 71,7° betragen. Die Kreise und zugehörigen Radien, auf denen nach dem jeweiligen Übertragungsstandard die Symbole $S_{m,n}$ liegen, werden im nachfolgenden Text als Sollkreise bzw. Sollradien Rs bezeichnet. Um die Schreibung zu vereinfachen, wird ferner nachfolgend auf die Index-Schreibweise der Bezeichnungen und Bezugszeichen verzichtet.

In Fig. 2 und Fig. 3 wird jeweils das Signal s eines einzelnen Nyquist-Impulses sn dargestellt. Die durchgehende Linie zeigt den analogen Verlauf des digitalen Signals, das als kontinuierliches Signal übertragen wird. Das typische an dem Nyquist-Impuls sn ist, daß das Signal zu allen Symbolabtastzeitpunkten t/T = +/-n durch den Wert Null geht und nur bei dem Symbolabtastzeitpunkt t/T=0 einen von Null abweichenden Wert aufweist, nämlich den eigentlichen Symbolwert S. Wird das analoge Signal s bzw. der Nyquist-Impuls sn wie in Fig. 2 mit einem ganzzahligen Vielfachen des Symbolabtasttaktes ts und synchron dazu abgetastet und digitalisiert, dann liefert genau der Abtastwert zum Zeitpunkt t/T = 0 den digitalen Symbolzustand. Die Abtastwerte zwischen den Symbolabtastwerten t/T = +/-n, beispielsweise bei t/T = -0,5 oder t/T = 1,5, spielen für die Symbolerkennung keine Rolle und können ausgeblendet werden.

Anders ist es bei dem nach Fig. 3 abgetasteten und digitalisierten Nyquist-Impuls sn. Hier ist der Abtast- und Digitalisierungstakt td gegenüber dem Symbolabtastzeitpunkt ts weder in der Frequenz noch in der Phase synchronisiert. Die Abtastwerte td für die Digitalisierung fallen somit allenfalls zufällig mit einem der regulären Symbolabtastzeitpunkte ts zusammen. Die zuverlässige Erfassung des digitalen Symbolzustandes zum Zeitpunkt t/T=0 ist somit durch die vorhandenen Abtastwerte nicht ohne weiteres möglich. Hier sind Abtasteinrichtungen für die Symbole erforderlich, die eine zeitliche Interpolation der realen Abtastwerte durchführen, um rechnerisch möglichst genau den Abtastwert zum Zeitpunkt t/T=0 zu ermitteln. Wegen des relativ schmalen Nyquist-Impulses, der bei t/T = -1 und t/T = +1 die ersten Nulldurchgänge aufweist, sind Interpolationsverfahren höherer Ordnung ratsam, damit die Impulsspitze S bei t/T=0 gut erfaßt wird. Die kleinen runden Kreise entsprechen in Fig. 2 und Fig. 3 den realen Abtastwerten. Die kleinen Quadrate in Fig. 3 entsprechen interpolierten Abtastwerten, die für die weitere Verarbeitung als Daten zur Verfügung stehen. Bei der Übertragung eines digitalen Datenstromes werden die einzelnen Nyquist-Impulse sn taktweise einander überlagert und als I- und Q-Komponenten übertragen.

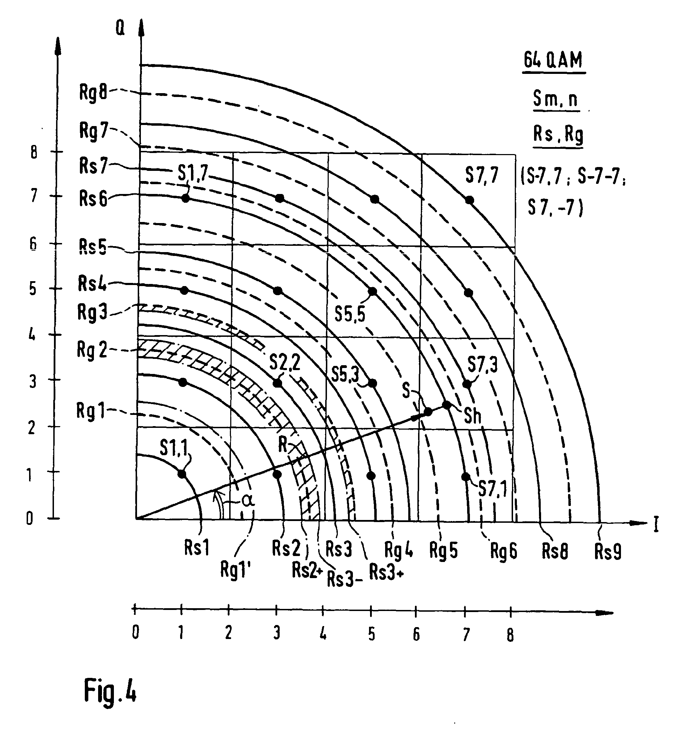

Fig. 4 zeigt in der I/Q-Ebene die 16 Positionen der Symbole Sm,n eines 64 QAM-Signals im ersten Quadranten. Für den Einrastvorgang gemäß der Erfindung ist es zunächst unerheblich, in welchem Quadranten die 64 Elemente Sm,n des Symbolalphabets liegen. Zur Verdeutlichung sind beim Symbol S7,7 die Symbole S-7,7; S-7,-7 und S7,-7 der drei anderen Quadranten in Klammer ergänzt. Das Diagramm von Fig. 4 zeigt zu den einzelnen Symbolen Sm,n das kartesische Koordinatennetz, das durch die beiden Quadratursignalkomponenten I, Q aufgespannt wird. Die Gitternetzlinien sind durch eine von 0 bis 8 laufende Skalierung auf den beiden Koordinatenachsen I, Q definiert.

In dem Diagramm von Fig. 4 sind ferner die Sollkreisbögen Rs eingezeichnet, die zum ersten Quadranten gehören und genau durch die Symbole Sm,n gehen. Für die 16 Symbole im ersten Quadranten und damit für alle 64 Symbole des QAM-Signals gibt es 9 Sollkreisbögen Rs1 bis Rs9, die als durchgehende Linien gezeichnet sind. Zu jedem Sollkreisbogen gehört ein Sollradius Rsi, weshalb in Fig. 4 als Bezugszeichen für die Sollkreisbögen die Sollradien Rs1 bis Rs9 verwendet werden. Drei Kreisbögen schneiden dabei jeweils nur ein Element Sm, n im ersten Quadranten. Der Kreisbogen Rs1 das Symbol S1,1, der Kreisbogen Rs3 das Symbol S2,2 und der äußerste Kreisbogen Rs9 das Element S7,7. Alle anderen Kreisbögen schneiden zwei Symbole, bis auf den Kreisbogen Rs6, der drei Symbole schneidet.

Als gestrichelte Linien sind in Fig. 4 ferner diejenigen Kreisbögen eingezeichnet, die genau mittig zwischen zwei Sollkreisbögen Rs liegen. Die Bezugszeichen dieser Kreisbögen laufen von Rg1 bis Rg8. Wenn bei einem empfangenen Symbol S, das infolge von Störungen oder nicht eingerasteten Regelkreisen von dem vorgegeben Symbolalphabet Sm,n abweicht, ein anderer Radius R gemessen wird, dann entsprechen die gestrichelt dargestellten Kreisbögen Grenzlinien, die den wahrscheinlichsten Sollradius Rs einschließen. Daher werden die Radien dieser Bereichsgrenzen im weiteren Text als Grenzradien Rg bezeichnet. Die Definition der Mitte zwischen zwei Sollkreisbögen als Grenzradius ist einfach aber nicht zwingend. So können die jeweiligen Grenzradien aus der Mitte in beiden Richtungen verschoben sein, wie die strichpunktierten Kreisbögen in Fig. 4 zeigen. Der Grenzradius Rg1' vergrößert beispielsweise den Erfassungsbereich um den Sollradius Rs1. Wird der Grenzradius Rg2 durch die beiden Grenzradien Rs2+ und Rs3- ersetzt, dann wird dazwischen ein gestrichelt gezeichneter Kreisring ausgespart, in dem eine Entscheidung über den wahrscheinlichsten Sollradius unterdrückt wird. Die Grenzradien Rs3- und Rs3+ engen den Auswertebereich für den Sollradius Rs3 ein, wodurch die Anzahl der Fehlentscheidungen reduziert wird. Zwischen dem dritten und vierten Sollradius Rs3 und Rs4 ist als Beispiel nochmals ein schmaler Ausblendbereich gestrichelt dargestellt, der zwischen dem Grenzradius Rs3+ und dem mittig liegendem Grcnzradius Rg3 liegt.

Die Sollradien Rs6 und Rs7 unterscheiden sich nur wenig von einander. Unter Umständen ist es sinnvoll, diese unsicheren Bereiche von der Entscheidung, welches der wahrscheinlichste Sollradius ist, auszublenden. Dieser Bereich könnte beispielsweise durch die Grenzradien Rg5 und Rg7 definiert sein.

Erfolgt die Auswahl des wahrscheinlichsten Sollradius Rsi nicht allein über den Radius R sondern auch noch über den Winkel $\alpha$, dann sind die Bereichsgrenzen keine reinen Kreisbögen mehr sondern verformen sich mehr oder weniger. In der Nähe eines zu erwartenden Symbols Sm,n nehmen die Bereiche zu und wenn das mögliche Symbol Sm,n winkelmäßig relativ weit entfernt ist, nehmen die Bereiche entsprechend ab.

Als Beispiel zeigt Fig. 4 die Bildung eines Hilfssymbols Sh aus einem empfangenen Signal s bzw. einem vorläufigen Symbol S. Dieses Symbol S hat die Radius- und Winkelkomponente R und $\alpha$. Das vorläufige Symbol S liegt innerhalb der Bereichsgrenzen Rg5 und Rg6. Der wahrscheinlichste Sollradius Rsi, der dem Symbol S zukommt, ist somit der Sollradius Rs6. Nun wird die Position des Hilfssymbols Sh definiert, indem der wahrscheinlichste Sollradius Rs6 und die vorhandene Winkelkomponente $\alpha$ genommen wird. Die Polarkoordinaten Rs6 und $\alpha$ des Hilfssymbols Sh können mit Hilfe des kartesischen Gitterrasters oder über eine geeignete Transformation in Komponenten des Quadratursignalpaares I, Q umgesetzt werden. Das Hilfssymbol Sh entspricht somit bis auf die Winkelkomponente $\alpha$ den Symbolen S1,7; S5,5 oder S7,1, die alle auf dem gleichen Sollradius Rs6 liegen. Dies ist ein wesentlicher Unterschied zu üblichen Symbolentscheidern, die im wesentlichen eine Abstandsentscheidung durchführen. Das vorläufige Symbol S wäre bei derartigen Abstandsentscheidern dem Symbol S7,3 oder allenfalls noch dem Symbol S5,3 zugeordnet worden, die beide näher als die Symbole auf den Sollkreis Rs6 liegen.

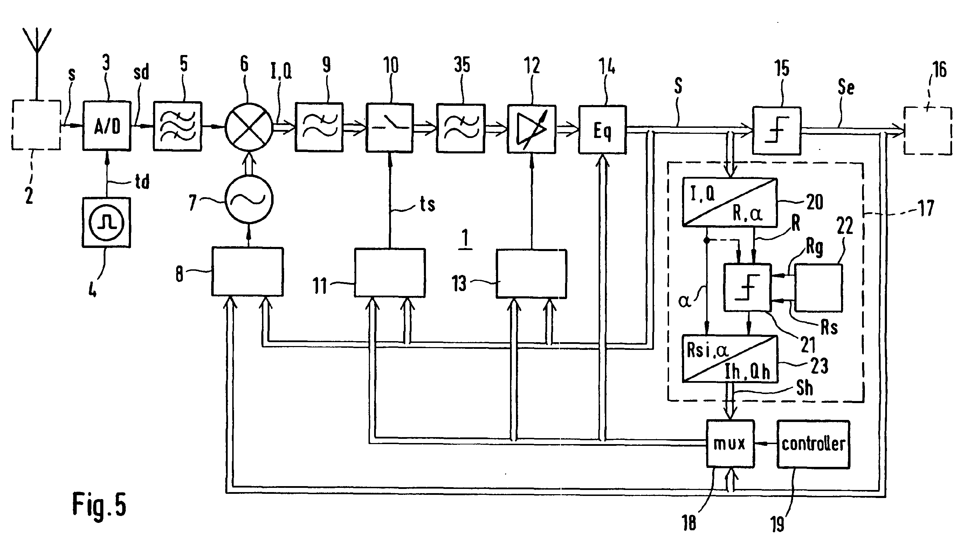

Fig. 5 zeigt schematisch als Blockschaltbild ein Ausführungsbeispiel eines erfindungsgemäßen Demodulators 1 für den Empfang von digitalen Signalen s mit einem Hilfssymbolerzeuger. Eine Signalquelle 2, beispielsweise ein Tuner, liefert das digitale Signal s in einer bandbegrenzten Zwischenfrequenzlage. Dort wird es mittels eines A/D-Umsetzers 3 abgetastet und digitalisiert. Den festen Digitalisierungstakt td liefert ein Taktgenerator 4. In der Regel ist der Digitalisierungstakt td mit dem Systemtakt für den gesamten Demodulator 1 identisch. Das Ausgangssignal des A/D-Umsetzers 3 ist ein digitalisiertes Signal sd, das einem Bandpass 5 zugeführt ist, der es von Gleichanteilen und störenden Oberwellen befreit. An den Bandpass 5 ist ein Quadraturumsetzer 6 angeschlossen, der das digitale Signal s bzw. das digitalisierte Signal sd in das Basisband umsetzt und es in die beiden Quadratursignalkomponenten I, Q aufspaltet. Zur Frequenzumsetzung ist der Quadraturumsetzer 6 mit zwei um 90 Grad versetzten Trägern aus einem lokalen Oszillator 7 gespeist, dessen Frequenz und Phase durch eine Trägerregeleinrichtung 8 gesteuert wird. Vor der weiteren Verarbeitung wird das Quadratursignalpaar I, Q mittels eines Tiefpasses 9 von störenden Oberwellen befreit. Das gefilterte Quadratursignalpaar I, Q wird dann einer Symbol-Abtasteinrichtung 10 zugeführt, die von einer Abtastregeleinrichtung 11 gesteuert ist, die die Symbolabtastzeitpunkte ts definiert. Die Symbolabtastzeitpunkte ts orientieren sich im normalen Betriebszustand dabei an der Symbolrate 1/T und der genauen Phasenlage des empfangenen digitalen Signals s. Weil der Digitalisierungstakt td gegenüber der Symbolrate 1/T nicht synchronisiert ist, erfolgt in der Abtasteinrichtung 10 eine zeitliche Interpolation zwischen den realen Abtastwerten auf der Symbolrate oder einem ganzzahligen Vielfach davon, vergleiche hierzu auch Fig. 3.

Das Ausgangssignal der Abtasteinrichtung 10 wird mittels eines Tiefpasses 35 mit einer Nyquist-Charakteristik gefiltert und einer rückgekoppelten Verstärkungsregeleinrichtung 12 zugeführt. Deren Steuerung erfolgt durch eine Verstärkungs-Regeleinrichtung 13. Die Verstärkungsregelung 12 ist erforderlich, damit der Aussteuerbereich des Entscheiders 15 richtig ausgenutzt wird. Nach dem Entzerrer 14 sind die beiden Komponenten des Quadratursignalpaares I, Q von störenden Verzerrungen befreit und stehen nun als vorläufiges Symbol S zur Verfügung. Aus den vorläufigen Symbolen S werden dann mittels eines Symbolentscheiders 15 "entschiedene Symbole" Se gebildet, die weiteren digitalen Signalverarbeitungseinrichtungen 16 und den entscheidungsrückgekoppelten Regelkreisen 8, 11, 13, 14 im Demodulator 1 direkt oder über einen Multiplexer 18 zugeführt werden. Da für den Regelvorgang in der Trägerregeleinrichtung 8 auch zunächst nicht auf eine Winkelkomponente $\alpha$ verzichtet werden kann, ist die Regeleinrichtung 8 nicht wie die anderen Regelkreise 11, 13, 14 an den Multiplexer 18 angeschlossen.

Die Erzeugung des Hilfssymbols Sh erfolgt durch einen Hilfssymbolentscheider 17. Der Hilfssymbolentscheider 17 enthält in seinem Eingang einen Koordinatenumsetzer 20, der aus dem abgetasteten Quadratursignalpaar I, Q bzw. dem vorläufigen Symbol S die zugehörigen Polarkoordinaten R und $\alpha$ bildet. Ein Radiusentscheider 21 entscheidet dann aus den Polarkoordinaten R, $\alpha$, insbesondere aus der Radiuskomponente R, welches der wahrscheinlichste Sollradius Rsi ist. Die Grenzradien Rg und die zugehörigen Sollradien Rs werden dabei zweckmäßigerweise aus einer Tabelle 22 abgefragt. Das Ergebnis der Radiusentscheidung ist der wahrscheinlichste Sollradius Rsi, der in Verbindung mit der Winkelkomponente $\alpha$ einem inversen Koordinatenumsetzer 23 zugeführt wird, der aus den polaren Komponenten Rsi, $\alpha$ des Hilfssymbols Sh die Quadraturkomponenten Ih, Qh, bildet. Die Quadraturkomponenten sind einem Eingang des Multiplexers 18 zugeführt, dessen anderer Eingang mit den Quadraturkomponenten des entschiedenen Symbols Se gespeist ist. Den Regeleinrichtungen 11 und 13 und dem Entzerrer 14 kann in der Einregelphase somit das relativ zuverlässige Hilfssymbol Sh statt des unsicheren, entschiedenen Symbols Se zugeführt werden.

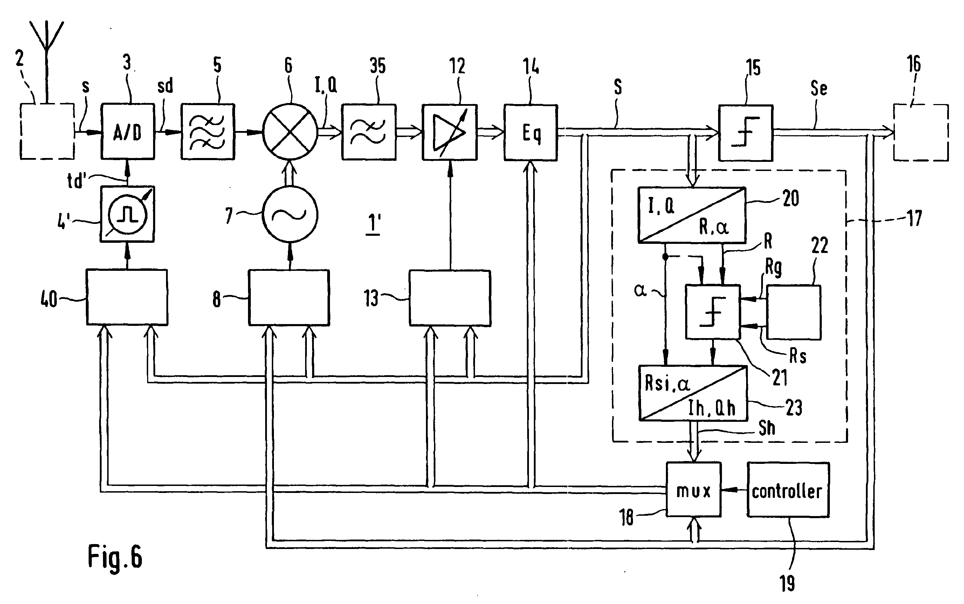

Das Blockschaltbild von Fig. 6 zeigt das Blockschaltbild eines anderen Ausführungsbeispiels eines erfindungsgemäßen Demodulators 1' für den Empfang von digitalen Signalen s mit einem Hilfssymbolerzeuger 17 wie in Fig. 5. Der Demodulator 1' zeigt alternativ zur Abtastung und Digitalisierung mit einem festen Digitalisierungstakt td gemäß Fig. 5 einen in der Frequenz und Phase geregelten Abtast-und Digitalisierungstakt td' aus einem regelbaren Oszillator 4'. Durch eine Regeleinrichtung 40 wird dabei der Digitalisierungstaktes td' phasengenau auf den Symboltakt 1/T oder ein Vielfaches davon synchronisiert, vergleiche hierzu auch Fig. 2. Die spätere Interpolation in der Abtasteinrichtung 10 von Fig. 5 kann damit entfallen. Weiterhin kann die Abtasteinrichtung 10 als eigene Funktionseinheit sogar selbst entfallen, da ihre Funktion von dem Entzerrer 14, der auf der Symbolrate 1/T arbeitet, automatisch mitübernommen wird. Der Tiefpaß 9 nach dem Quadraturumsetzer 6 ist ebenfalls nicht mehr erforderlich. Seine begrenzende Wirkung übernimmt der Tiefpaß 35 mit der Nyquist-Charakteristik.

Zur Steuerung der Regeleinrichtung 40 wird deren Steuereingängen das vorläufige Symbol S und im Anlauffall das Hilfssymbol Sh zugeführt. Wenn der resultierende Digitalisierungstakt td' genau genug mit der Symbolrate 1/T synchronisiert ist, wird wie bei den Regelkreisen 13 und 14 mittels des Multiplexers 18 vom Hilfssymbol Sh auf das entschiedene Symbol Se umgeschaltet.

Bis auf die beschriebenen Unterschiede ist das Ausführungsbeispiel nach Fig. 6 identisch zum Ausführungsbeispiel von Fig. 5. In beiden Schaltbildern sind daher einander entsprechende Funktionseinheiten mit den gleichen Bezugszeichen versehen, so daß sich eine nochmalige Erörterung erübrigt.

Die Schnittstelle 3 für die Digitalisierung in Fig. 5 und Fig. 6 kann auch nach dem Quadraturumsetzer 6 folgen, beispielsweise wenn die Zwischenfrequenzlage nach der Signalquelle 2 zu hoch ist. Die Funktion des Hilfssymbols Sh und dessen Erzeugung ist davon nicht direkt betroffen. Allerdings können sich durch die zum Teil analogen Signalpfade Fehler und Unsymmetrien, insbesondere bei den Quadraturkomponenten I, Q, einschleichen, die sich durch den Entzerrer 14 kaum mehr beseitigen lassen und so die Unsicherheit in der Symbolerkennung erhöhen.

## Patentansprüche

1. Verfahren zur Erzeugung eines Hilfssymbols, das beim Empfang von digitalen, mit einem Quadratursignalpaar (I, Q) gekoppelten Signalen das entschiedene Symbol ersetzt und damit dem schnelleren Einrasten von entscheidungsrückgekoppelten Regelschleifen dient, **dadurch gekennzeichnet, daß** das Verfahren folgende Schritte aufweist:

   a) in der vom Quadratursignalpaar (I, Q) aufgespannten Ebene werden Sollradien (Rs), auf denen die Symbole des Alphabets liegen, und Bereichsgrenzen (Rg), die sich an den Sollradien (Rs) orientieren, festgelegt,
   b) mittels einer von Symbolabtastzeitpunkten (ts) abhängigen Abtasteinrichtung (10; 14) werden vorläufige Symbole (S) aus dem digitalen Signal (s) bestimmt,
   c) die polaren Koordinaten (R, $\alpha$), des vorläufigen Symbols (S) werden ermittelt,
   d) die Position des Hilfssymbols (Sh) wird definiert durch den wahrscheinlichsten Sollradius (Rsi) und die Winkelkomponente ($\alpha$) des vorläufigen Symbols, wobei die Entscheidung, welcher Sollradius der wahrscheinlichste ist, über die Bereichsgrenzen erfolgt.

2. Verfahren nach Anspruch 1, bei dem sich die in Schritt a) festzulegenden Bereichsgrenzen außerdem an der Lage der in Betracht zu ziehenden Symbole in der Quadratursignalebene orientieren.

3. Verfahren nach Anspruch 1 oder 2, bei dem die Polarkoordinaten (Rsi, $\alpha$) des Hilfssymbols (Sh) in ein kartesisches Koordinatensystem umgesetzt werden, das von dem Quadratursignalpaar (I, Q) aufgespannt wird.

4. Verfahren nach einem der vorhergehenden Ansprüche, bei dem das digitale Signal (s) ein digitalisiertes Signal (sd) ist, das mittels einer mit einem Digitalisierungstakt (td) gekoppelten Abtast-und-Digitalisierungseinrichtung (3) digitalisiert ist, wobei in der Abtasteinrichtung (10) entsprechend dem jeweiligen Symbolabtastzeitpunkt (ts) zur Bildung des vorläufigen Symbols (S) eine zeitliche Interpolation des digitalisierten Signals (sd) stattfindet, wenn der Digitalisierungstakt (td) und die Symbolabtastzeitpunkte (ts) in der Frequenz und/oder Phase voneinander unabhängig sind.

5. Verfahren nach einem der Ansprüche 1 bis 3, bei dem das digitale Signal (s) ein digitalisiertes Signal (sd) ist, das mittels einer mit einem Digitalisierungstakt (td') gekoppelten Abtast-und-Digitalisierungseinrichtung (3) digitalisiert ist, wobei in einer der nachfolgenden Einrichtungen (10; 14) aus dem digitalisierten Signal (sd) derjenige Datenwert für die Bildung des vorläufigen Symbols (S) entnommen wird, der dem jeweiligen Symbolabtastzeitpunkt (ts) entspricht, wenn der Digitalisierungstakt (td) und die Symbolabtastzeitpunkte (ts) in der Frequenz und/oder Phase voneinander abhängig sind.

**6.** Verfahren nach einem der vorhergehenden Ansprüche, bei dem nur eine Auswahl der Sollradien (Rs) für die Erzeugung des Hilfssymbols (Sh) zur Verfügung steht,

**7.** Verfahren nach Anspruch 6, bei dem mit den Sollradien (Rs) Gewichtungsfaktoren verknüpft sind.

**8.** Verfahren nach einem der vorhergehenden Ansprüche, bei dem mindestens eine der Bereichsgrenzen durch eine Radiengrenze (Rgi; Rgi'; Rsi+; Rsi-) definiert ist.

**9.** Verfahren nach Anspruch 8, bei dem mindestens eine der Radiengrenzen (Rgi'; Rsi+; Rsi-) nicht mittig zu den benachbarten Sollradien (Rs) liegt,

**10.** Verfahren nach einem der vorhergehenden Ansprüche, bei dem die Bereichsgrenzen zwischen zwei benachbarten Sollradien (Rs) so definiert sind, daß ein Teil des Bereiches zwischen den zwei benachbarten Sollradien (Rs) für die Erzeugung des Hilfssymbols (Sh) ausgeblendet wird.

**11.** Verfahren nach einem der vorhergehenden Ansprüche, bei dem das Hilfssymbol (Sh) während des Einregelvorganges mindestens einem entscheidungsrückgekoppelten Regelkreis (11, 13, 14; 40, 13, 14) über einen Multiplexer (18) zugeführt ist, an dessen anderem Signaleingang ein Symbolentscheider (15) für entschiedene Symbole (Se) angeschlossen ist.

**12.** Verfahren nach Anspruch 11, bei dem der Multiplexer (18) dann vom Hilfssymbol (Sh) auf ein entschiedenes Symbol (Se) umgeschaltet wird, wenn das entschiedene Symbol (Se) sicher innerhalb des Fangbereiches eines entscheidungsrückgekoppelten Regelkreises (11, 13, 14; 40, 13, 14) liegt.

**13.** Schaltungsanordnung (17), zur Erzeugung eines Hilfssymbols (Sh) aus einem vorläufigen Symbol (S) eines Quadratursignalpaars (I, Q), **dadurch gekennzeichnet, daß** die Schaltungsanordnung (17) einen Koordinatenumsetzer (20) aufweist, der kartesische Quadratursignalkomponenten (I, Q) des vorläufigen Symbols (S) in polare Koordinaten (R, $\alpha$) umsetzt, daß die Schaltungsanordnung (17) Mittel (22) zur Berechnung oder zur Speicherung von Bereichsgrenzen (Rg) aufweist, die sich an Sollradien (Rs) orientieren, auf denen die Symbole des Alphabets liegen, und daß die Schaltungsanordnung (17) einen Radiusentscheider (21) aufweist, der aus dem vorläufigen Symbol (S) anhand der Bereichsgrenzen (Rg) einen wahrscheinlichsten Sollradius (Rsi) bestimmt, wobei der Radiusentscheider (21) Radiusinformationen (R) des vorläufigen Symbols (S) verwendet, wobei die Schaltungsanordnung (17) das Hilfssymbol (Sh) erzeugt durch Verbindung des wahrscheinlichsten Sollradius (Rsi) mit der Winkelkomponente ($\alpha$) des vorläufigen Symbols (S).

**14.** Schaltungsanordnung nach Anspruch 13, bei welcher der Radiusentscheider (21) die Radius- und Winkelinformation (R, $\alpha$) des vorläufigen Symbols (S) verwendet.

**15.** Schaltungsanordnung nach einem der Ansprüche 13 oder 14, die einen weiteren Koordinatenumsetzer (23) aufweist, der die polaren Koordinaten (Rsi, $\alpha$) des Hilfssymbols (Sh) in kartesische Koordinaten (Ih, Qh) in einer vom Quadratursignalpaar (I, Q) aufgespannten Ebene umsetzt.

**16.** Schaltungsanordnung nach einem der Ansprüche 13 - 15, mit einem Multiplexer (18), an dessen einem Signaleingang das Hilfssymbol (Sh) zugeführt ist, und an dessen anderem Signaleingang ein Symbolentscheider (15) für entschiedene Symbole (Se) angeschlossen ist.

**17.** Schaltungsanordnung nach Anspruch 16, mit einer Steuereinrichtung (19) für den Multiplexer (18), welche den Multiplexer dann vom Hilfssymbol (Sh) auf ein entschiedenes Symbol (Se) umschaltet, wenn das entschiedene Symbol (Se) sicher innerhalb des Fangbereiches eines entscheidungsrückgekoppelten Regelkreises (11, 13, 14; 40, 13, 14) liegt.

**Claims**

**1.** A method of generating an auxiliary symbol (Sh) which, when digital signals locked to a quadrature signal pair (I, Q) are received, replaces the decision symbol and thus serves to more quickly bring decision-feedback loops into lock, **characterized in that** the method comprises the following steps:

a) In the plane determined by the quadrature signal pair (I, Q), nominal radii (Rs), on which the symbols of the alphabet lie, and range limits (Rg) determined by to the nominal radii (Rs) are fixed;
b) by means of a sampling device (10; 14) dependent on symbol sampling instants (ts), preliminary symbols (S) are determined from the digital signal (s);
c) the polar coordinates (R, $\alpha$) of the preliminary symbol (S) are determined;
d) the position of the auxiliary symbol (Sh) is defined by the most probable nominal radius (Rsi) and the angle component ($\alpha$) of the preliminary symbol, with the decision on the most probable nominal radius being made via the range limits.

2. A method as claimed in claim 1 wherein the range limits to be fixed in step a) are also determined by the positions of the symbols to be considered in the quadrature signal plane.

3. A method as claimed in claim 1 or 2 wherein the polar coordinates (Rsi, $\alpha$) of the auxiliary symbol (Sh) are converted into a Cartesian coordinate system determined by the quadrature signal pair (I, Q).

4. A method as claimed in any one of the preceding claims wherein the digital signal (s) is a digitized signal (sd) which is digitized by means of a sampling and digitization device (3) locked to a digitization clock (td), the sampling device (10) performing a temporal interpolation of the digitized signal (sd) as a function of the respective symbol sampling instant (ts) to form the preliminary symbol (S) when the digitization clock (td) and the symbol sampling instants (ts) are independent of each other in frequency and/or phase.

5. A method as claimed in any one of claim 1 to 3 wherein the digital signal (s) is a digitized signal (sd) which is digitized by means of a sampling and digitization device (3) locked to a digitization clock (td'), and wherein for the formation of the preliminary symbol (S), one of the subsequent devices (10; 14) takes from the digitized signal (sd) that data value which corresponds to the respective symbol sampling instant (ts) when the digitization clock (td) and the symbol sampling instants (ts) are dependent on each other in frequency and/or phase.

6. A method as claimed in any one of the preceding claims wherein only a selection of the nominal radii (Rs) is available for the generation of the auxiliary symbol (Sh).

7. A method as claimed in claim 6 wherein weighting factors are combined with the nominal radii (Rs).

8. A method as claimed in any one of the preceding claims wherein at least one of the range limits is defined by a radius limit (Rgi; Rgi' ; Rsi+; Rsi-).

9. A method as claimed in claim 8 wherein at least one of the radius limits (Rgi' ; Rsi+; Rsi-) does not lie midway between the adjacent nominal radii (Rs).

10. A method as claimed in any one of the preceding claims wherein the range limits between two adjacent nominal radii (Rs) are so defined that part of the range between the two adjacent nominal radii (Rs) is masked out for the generation of the auxiliary symbol (Sh).

11. A method as claimed in any one of the preceding claims wherein during the acquisition process, the auxiliary symbol (Sh) is applied to at least one decision-feedback loop (11, 13, 14; 40, 13 14) through a multiplexer (18) having its other signal input connected to a symbol decision stage (15) for decision symbols (Se).

12. A method as claimed in claim 11 wherein the multiplexer (18) is switched from the auxiliary symbol (Sh) to a decision symbol (Se) when the decision symbol (Se) is definitely within the capture range of a decision-feedback loop (11, 13, 14; 40, 13, 14).

13. A circuit arrangement (17) for generating an auxiliary symbol (Sh) from a preliminary symbol (S) of a quadrature signal pair (I, Q), **characterized in that** the circuit arrangement (17) comprises a resolver (20) which converts Cartesian quadrature signal components (I, Q) of the preliminary symbol (S) into polar coordinates (R, $\alpha$), that the circuit arrangement (17) further comprises means (22) for calculating or storing range limits (Rg) which are determined by nominal radii (Rs) on which the symbols of the alphabet are located, and that the circuit arrangement (17) further comprises a radius decision stage (21) which determines a most probable nominal radius (Rsi) from the preliminary symbol (S) on the basis of the range limits (Rg) using radius information (R) of the preliminary symbol (S), with the circuit arrangement (17) generating the auxiliary symbol (Sh) by connecting the most probable nominal radius (Rsi) with the angle component ($\alpha$) of the preliminary symbol (S).

14. A circuit arrangement as claimed in claim 13 wherein the radius decision stage (21) uses the radius and angle information (R, $\alpha$) of the preliminary symbol (S).

15. A circuit arrangement as claimed in claim 13 or 14, comprising a further resolver (23) which converts the polar coordinates (Rsi, $\alpha$) of the auxiliary symbol (Sh) to Cartesian coordinates (Ih, Qh) in a plane determined by the quadrature signal pair (I, Q).

16. A circuit arrangement as claimed in any one of claims 13 to 15, comprising a multiplexer (18), one signal input of which is provided with the auxiliary symbol (Sh) and the other signal input of which is connected to a symbol decision stage (15) for decision symbols (Se).

17. A circuit arrangement as claimed in claim 16, comprising a controller (19) for the multiplexer (18) which switches the multiplexer from the auxiliary symbol (Sh) to a decision symbol (Se) when the decision symbol (Se) is definitely within the capture range of a decision-feedback loop (11, 13, 14; 40, 13, 14).

## Revendications

**1.** Procédé pour générer un symbole auxiliaire (Sh) qui, lors de la réception de signaux numériques couplés à une paire de signaux en quadrature (I, Q), remplace le symbole décidé et sert, de ce fait, à l'incrustation plus rapide de boucles de réglage à réaction de décision, **caractérisé en ce que** le procédé comprend les étapes suivantes :

a) dans le plan déterminé par la paire de signaux en quadrature (I, Q), on fixe des rayons de consigne (Rs), sur lesquels se trouvent les symboles de l'alphabet, et des limites de domaine (Rg) qui s'orientent sur les rayons de consigne (Rs),
b) au moyen d'un dispositif d'échantillonnage (10 ; 14) dépendant d'instants d'échantillonnage de symbole (ts), on détermine des symboles provisoires (S) à partir du signal numérique (s),
c) on détermine les coordonnées polaires (R, $\alpha$) du symbole provisoire (S),
d) on définit la position du symbole auxiliaire (Sh) au moyen du rayon de consigne le plus probable (Rsi) et des composantes angulaires ($\alpha$) du symbole provisoire (S), la décision de déterminer quel rayon de consigne (Rs) est le plus probable étant obtenue par l'intermédiaire des limites de domaine (Rg).

**2.** Procédé selon la revendication 1, dans lequel les limites de domaine (Rg) à fixer dans l'étape a) s'orientent en outre sur la position des symboles à prendre en considération dans le plan des signaux en quadrature.

**3.** Procédé selon la revendication 1 ou 2, dans lequel les coordonnées polaires (Rsi, $\alpha$) du symbole auxiliaire (Sh) sont converties dans un système de coordonnées cartésiennes qui est délimité par la paire de signaux en quadrature (I, Q).

**4.** Procédé selon l'une quelconque des revendications précédentes, dans lequel le signal numérique (s) est un signal numérisé (sd) qui est numérisé au moyen d'un dispositif d'échantillonnage et de numérisation (3) qui est couplé au moyen d'une cadence de numérisation (td) et dans lequel une interpolation temporelle du signal numérisé (sd) a lieu dans le dispositif d'échantillonnage (10) en correspondance avec l'instant d'échantillonnage de symbole (ts) respectif pour la formation du symbole provisoire (S) quand la cadence de numérisation (td) et les instants d'échantillonnage de symbole (ts) sont indépendants l'un de l'autre en fréquence et/ou en phase.

**5.** Procédé selon l'une quelconque des revendications 1 à 3, dans lequel le signal numérique (s) est un signal numérisé (sd) qui est numérisé au moyen d'un dispositif d'échantillonnage et de numérisation (3) qui est couplé au moyen d'une cadence de numérisation (td') et dans lequel, dans un des dispositifs disposés en amont (10 ; 14), on prélève dans le signal numérisé (sd), pour la formation du symbole provisoire (S), celle des valeurs de données qui correspond à l'instant d'échantillonnage de symbole (ts) respectif quand la cadence de numérisation (td) et les instants d'échantillonnage de symbole (ts) sont dépendants l'un de l'autre en fréquence et/ou en phase.

**6.** Procédé selon l'une quelconque des revendications précédentes, dans lequel on ne dispose seulement que d'un choix des rayons de consigne (Rs) pour la production du symbole auxiliaire (Sh).

**7.** Procédé selon la revendication 6, dans lequel des facteurs de pondération sont combinés avec les rayons de consigne (Rs).

**8.** Procédé selon l'une quelconque des revendications précédentes, dans lequel au moins une des limites de domaine (Rg) est définie par une limitation de rayon (Rgi ; Rgi' ; Rsi+ ; Rsi-).

**9.** Procédé selon la revendication 8, dans lequel au moins une des limitations de rayon (Rgi' ; Rsi+ ; Rsi-) ne se trouve pas au milieu par rapport aux rayons de consigne (Rs) voisins.

**10.** Procédé selon l'une quelconque des revendications précédentes, dans lequel les limites de domaine (Rg) se trouvant entre deux rayons de consigne (Rs) voisins sont définies de telle manière qu'une partie du domaine se trouvant entre deux rayons de consigne (Rs) voisins est supprimée pour la génération du symbole auxiliaire (Sh).

**11.** Procédé selon l'une quelconque des revendications précédentes, dans lequel le symbole auxiliaire (Sh) est envoyé, pendant le processus de réglage, à au moins un circuit de réglage (11, 13, 14 ; 40, 13, 14) à réaction de décision par l'intermédiaire d'un multiplexeur (18), sur l'autre entrée de signal duquel on relie un circuit de décision de symbole (15) pour des symboles décidés (Se).

**12.** Procédé selon la revendication 11, dans lequel le multiplexeur (18) est commuté par le symbole auxiliaire (Sh) sur un symbole décidé (Se) lorsque le symbole décidé (Se) se trouve de manière sûre à l'intérieur de la zone de capture d'un circuit de réglage (11, 13, 14 ; 40, 13, 14) à réaction de décision.

**13.** Circuit (17) pour générer un symbole auxiliaire (Sh) à partir d'un symbole provisoire (S) d'une paire de signaux en quadrature(I, Q), **caractérisé en ce que** le circuit (7) comporte un convertisseur de coordonnées (20) qui convertit des composantes cartésiennes des signaux en quadrature (I, Q) du symbole provisoire (S) en coordonnées polaires (R, α), **en ce que** le circuit (17) comporte des moyens (22) pour le calcul ou pour la mémorisation de limites de domaine (Rg) qui s'orientent sur des rayons de consigne (Rs) sur lesquels se trouvent les symboles de l'alphabet et **en ce que** le circuit (17) comporte un circuit de décision de rayons (21) qui détermine un rayon de consigne (Rsi) le plus probable à partir du symbole provisoire (S) au moyen des limites de domaine (Rg), le circuit de décision de rayons (21) utilisant des informations de rayon (R) du symbole provisoire (S) et le circuit (17) produisant le symbole auxiliaire (Sh) par combinaison du rayon de consigne le plus probable (Rsi) avec les composantes angulaires (α) du symbole provisoire (S).

**14.** Circuit selon la revendication 13, dans lequel le circuit de décision de rayons (21) utilise les informations de rayon et d'angle (R, α) du symbole provisoire (S).

**15.** Circuit selon l'une des revendications 13 ou 14, qui comporte un autre convertisseur de coordonnées (23) qui convertit les coordonnées polaires (Rsi, α) du symbole auxiliaire (Sh) en des coordonnées cartésiennes (Ih, Qh) dans un plan délimité par la paire de signaux en quadrature (I, Q).

**16.** Circuit selon l'une des quelconque des revendications 13 à 15, comportant un multiplexeur (18) sur une entrée de signal duquel on envoie le symbole auxiliaire (Sh) et sur l'autre entrée de signal duquel est relié un circuit de décision de symboles (15) pour différents symboles (Se).

**17.** Circuit selon la revendication 16, comportant un circuit de commande (19) qui est destiné au multiplexeur (18) et qui commute le multiplexeur (18) du symbole auxiliaire (Sh) à un symbole décidé (Se) lorsque le symbole décidé (Se) se trouve de manière sûre à l'intérieur de la zone de capture d'un circuit de réglage (11, 13, 14 ; 40, 13, 14) à réaction de décision.

16 QAM
$S_{m,n}$
$R_1 = 1{,}41$
$R_2 = 3{,}16$
$R_3 = 4{,}24$
Q
I
5
5
$S_{-3,3}$
$S_{-1,3}$
$S_{1,3}$
$S_{3,3}$
$S_{-3,1}$
$S_{-1,1}$
$S_{1,1}$
$S_{3,1}$
$S_{-3,-1}$
$S_{-1,-1}$
$S_{1,-1}$
$S_{3,-1}$
$S_{-3,-3}$
$S_{-1,-3}$
$S_{1,-3}$
$S_{3,-3}$
$K_1$
$K_2$
$K_3$
$R_1$
$R_2$
$R_3$
71,7°
45°
α=18,3°

Fig.1

+s
S
sn
0
-
td
-3 -2 -1 0 1 2 3
ts
t/T
+s
S
sn
-
td
-3 -2 -1 0 1 2 3
ts
t/T

Fig.2

Fig.3

64 QAM
Sm, n
Rs, Rg
(S-7,7 ; S-7-7 ; S7, -7)
Q
I
Rg8
Rg7
Rs7
Rs6
Rs5
Rs4
Rg3
Rg 2
Rg1
S1,7
S7,7
S5,5
S2,2
S5,3
S7,3
S
Sh
R
S1,1
S7,1
α
Rs1
Rg1'
Rs2
Rs2+
Rs3-
Rs3
Rs3+
Rg4
Rg5
Rg6
Rs8
Rs9
0
1
2
3
4
5
6
7
8

Fig.4

2
s
3
A/D
sd
td
4
5
6
7
8
I,Q
9
10
ts
11
35
1
12
13
14
Eq
S
15
Se
16
17
20
I,Q
R,α
R
α
21
Rg
Rs
22
23
Rsi,α
Ih,Qh
Sh
mux
18
controller
19

Fig.5

A/D
Eq
mux
controller
I,Q
R,α
Rsi,α
Ih,Qh
R
Rg
Rs
Sh
Se
S
s
sd
td'
α
1'

Fig.6